# EUROPEAN PATENT SPECIFICATION

(11) **EP 3 560 355 B1**
(45) Date of publication and mention of the grant of the patent: **06.05.2026**
(21) Application number: 18898642.6
(22) Date of filing: 05.03.2018
(51) Int. Cl.: A23P 10/22, A23L 33/16, A23L 33/165, A23K 40/10, A23N 17/00, A23K 20/20, A23P 10/25

(54) **MANUFACTURING METHOD AND MANUFACTURING DEVICE FOR TRACE ELEMENT SUPPLEMENT GRANULES**
HERSTELLUNGSVERFAHREN UND HERSTELLUNGSVORRICHTUNG FÜR SPURELEMENTERGÄNZUNGSGRANULATE
PROCÉDÉ DE FABRICATION ET DISPOSITIF DE FABRICATION POUR GRANULES DE COMPLÉMENTS À OLIGO-ÉLÉMENTS

(30) Priority: 05.01.2018 CN 201810012202
(43) Date of publication of application: 30.10.2019
(73) Proprietor: Xingjia Bio-Engineering Co., Ltd., Liuyang Changsha City, Hunan 410000 (CN)
(72) Inventor: HUANG, Yiqiang, Changsha, Hunan 410000 (CN); TAO, Jianjun, Changsha, Hunan 410000 (CN); YAO, Yajun, Changsha, Hunan 410000 (CN); DENG, Min, Changsha, Hunan 410000 (CN); PENG, Hongxing, Changsha, Hunan 410000 (CN); XIA, Feihui, Changsha, Hunan 410000 (CN); ZHANG, Yawei, Changsha, Hunan 410000 (CN)
(74) Representative: Lapienis, Juozas
(86) International application number: PCT/CN2018/078023
(87) International publication number: WO 2019/134251

(56) References cited:
- EP-A1- 3 111 957
- WO-A1-2013/036637
- CN-A- 103 754 872
- CN-A- 103 754 872
- CN-A- 103 889 247
- CN-A- 103 889 247
- CN-U- 205 547 224
- CN-U- 206 751 697
- CN-U- 206 751 697
- US-A- 3 794 478

## Description

### TECHNICAL FIELD

The present disclosure relates to the technical field of micronutrients, particularly to an apparatus for preparing micronutrient supplement granules.

### BACKGROUND

Micronutrient supplements, namely minerals and vitamins, are nutrients less needed by human and animals, and have effects on strengthening survival abilities, growth, health and/or fecundity of human and other animals. The micronutrient supplements, such as basic salts, hydroxy-methionine chelates, threonine chelates and the like, are usually powdery. When the powdery micronutrient supplements are directly added in various foods or feeds, other nutrients in the foods or feeds may be destroyed. Furthermore, direct addition of the powdery micronutrient supplements produces dust, which harms workers and environments. Therefore, it is necessary to prepare the powdery micronutrient supplements into granules with a certain diameter and strength.

According to the existing methods/devices for preparation of micronutrient supplement granules, a powdery product is usually dissolved, then a binder is added therein, and the granules are prepared by spray drying. For example, the Chinese patent No. CN201280051529.5 introduces a method for preparing granules, in which micronutrient supplements and a digestible binder are agglomerated, and then spray dried to form the granules. The disadvantages of such device include the complexity of the production process due to the addition of a binder, the high cost of spray drying, the low content due to the addition of a carrier, and the low strength of granules that leads to friable granules.

Document CN205547224 U discloses an integrated production equipment for amino acid particles, comprising a feeding bin, a humidifier, a conveying mechanism, a granulation mechanism and a return mechanism connected in sequence; wherein the conveying mechanism comprises a quantitative screw feeder and a bucket elevator; the granulation mechanism comprises a buffer bin, a forced screw cage, a roller tablet press, a crushing and granulating machine and a granulation silo; and the return mechanism comprises a swing screen, a return silo and a return screw feeder connected with the conveying mechanism. However, the bucket elevator used in this device will create much dust during production which is harmful for workers and the environment; further, the device cannot produce granules of a sufficient strength either.

### SUMMARY

The technical problem to be solved by the present disclosure is to overcome the defects and disadvantages mentioned in the above background of the disclosure, so as to provide an apparatus which is used to prepare micronutrient supplement granules with high qualities in a high production efficiency.

In order to solve the above technical problem, the technical solutions presented by the present disclosure are as follows:
There is provided in the present disclosure an apparatus for preparing micronutrient supplement granules.

The apparatus comprises a tablet press, a first grinding and granulating machine, and a screening unit. A discharge end of the tablet press is connected with a feed end of the first grinding and granulating machine. A discharge end of the first grinding and granulating machine is connected to a feed end of the screening unit. The screening unit comprises a primary screening machine and a secondary screening machine. A feed end of the primary screening machine is connected to the discharge end of the first grinding and granulating machine, and a discharge end of the primary screening machine is connected to a feed end of the secondary screening machine.

Further improvements of the above technical solution are as follows. According to the invention, a screen of the primary screening machine is a square-mesh screen, and a screen of the secondary screening machine is a round-mesh screen. With the two-stage screening, the screening fractions are more complete, the granules with a certain diameter can be obtained, and the one-time granulation rate is high.

The square-mesh size of the screen of the primary screening machine is ranging from 8 mm × 8 mm to 3 mm × 3 mm, and the round-mesh diameter of the screen of the secondary screening machine is ranging from 0.8 mm to 2.1 mm, in which the primary screening machine has two screens, in which the upper screen has the larger square-mesh size of 8 mm × 8 mm and the lower screen has the smaller square-mesh size of 3 mm × 3 mm. More preferably, the square-mesh size(s) of the screen(s) of the primary screening machine is ranging from 5 mm × 5 mm to 4 mm × 4 mm, and the round-mesh diameter of the screen of the secondary screening machine is ranging from 1.0 mm to 1.5 mm. The primary and the secondary screening machines adopting the above screen sizes achieve a better screening effect.

According to the invention, the tablet press comprises a pressing feed bin. The lower part of the pressing feed bin is connected to a feed end of the pressing feeding screw, and a discharge end of the pressing feeding screw is connected to a pressing roller. The conveying speed of the pressing feeding screw is ranging from 30r/min to 60r/min. The pressure applied by the pressing roller is ranging from 4 MPa to 20 MPa. Within the ranges of the conveying speed of the pressing feeding screw and the pressure applied by the pressing roller, the micronutrient supplement granules with a sufficient strength can be obtained.

According to the invention, the feed end of the tablet press is connected to a pressing feeding device. The pressing feeding device includes a pressing vacuum feeder, which is connected to a feeding bucket through a pipeline.

More preferably, a screening vacuum feeder and a screening bin are arranged between the first grinding and granulating machine and the screening unit. A feed end of the screening vacuum feeder is connected with the discharge end of the first grinding and granulating machine through a pipeline. A discharge end of the screening vacuum feeder is connected to a feed end of the screening bin. A discharge end of the screening bin is connected with the feed end of the primary screening machine. The steps of pressing, grinding and screening are performed in a closed environment without dust escaping. There may be dust escaping only in the feeding step. Because the micronutrient fed into a hopper is generally powdery, which may generate dust that has an adverse effect on the health of workers. The present disclosure adopts the pressing vacuum feeder and the screening vacuum feeder in feeding steps, so that there is no dust escaping in the whole preparation process, which improves the working environment of production workshop.

More preferably, a coarse-granule outlet of the primary screening machine is connected with a feed end of a second grinding and granulating machine. A discharge end of the second grinding and granulating machine is connected to a feed end of the screening vacuum feeder through a pipeline. In this way, coarse granules obtained after screening with the primary screening machine are grinded by the second grinding and granulating machine and then fed back to the primary screening machine to be screened again, such that the internal circulation of materials is realized, which improves the production efficiency, and reduces the waste of materials.

More preferably, fine-powder outlets of the primary and the secondary screening machines are both connected to a fine powder buffer bucket. The fine powder buffer bucket is connected to the feed end of the pressing vacuum feeder through a pipeline. In this way, fine powder obtained after screening with the primary and the secondary screening machines is fed into the screening unit to be screened again, which further improves the production efficiency, and reduces the waste of materials.

More preferably, the primary and the secondary screening machines are flexibly connected through a cloth bag, the screening bin and the primary screening machine are flexibly connected through a cloth bag, the primary screening machine and the second grinding and granulating machine are flexibly connected through a cloth bag, and the fine-powder outlets of the primary and the secondary screening machines are flexibly connected with the fine powder buffer bucket through a cloth bag. The flexible connections are convenient for the primary and the secondary screening machines to perform vibratory screening.

Compared with the conventional techniques, the present disclosure has the following advantages.
(1) The apparatus of the present disclosure physically presses, grinds and screens a micronutrient in sequence to obtain the granules with a certain granule diameter. Compared with the conventional wet apparatus which needs addition of a binder and adopts spray drying, the apparatus of the present disclosure does not need any binder added into the micronutrient, thus has reduced production cost. Moreover, when granulating with the apparatus of the present disclosure, it is not necessary to form slurry which is necessary in the conventional apparatus by stirring and dissolving the micronutrients and the binder. Therefore drying is unnecessary in the present apparatus. Thus, the apparatus greatly improves the production efficiency. Furthermore, since no binder is added in the micronutrient, the product prepared with the apparatus of the present disclosure has a higher purity.
(2) The apparatus of the present disclosure adopts two screening machines to perform the screening step. The screen(s) of the primary screening machine is square-mesh screen(s), and the screen of the secondary screening machine is round-mesh screen. Using screen(s) with the certain square-mesh size(s) and the screen with the certain round-mesh diameter, the screening effect is better, screening fractions are more complete, the micronutrient granules with a predetermined granule diameter can be obtained, and the one-time granulation rate is more than 80%.
(3) The apparatus of the present disclosure adopts the pressing vacuum feeder and the screening vacuum feeder to feed, thereby reducing the dust generating in the production processes, and mitigating the influence of the micronutrient dust on the health of workers.
(4) In the apparatus of the present disclosure, the coarse-granule outlet of the primary screening machine is connected with the second grinding and granulating machine, and after being grinded again, the coarse granules obtained from the primary screening stage are fed back to the primary screening machine to be screened again. The fine powder outlets of the primary and the secondary screening machines are connected to the pressing vacuum feeder, and the fine powder obtained by screening is fed back to the tablet press to be pressed to agglomerate again, thereby realizing the internal circulation of the materials, and reducing the waste of the materials.

### BRIEF DESCRIPTION OF DRAWINGS

FIG. 1 is a structure diagram of the apparatus of the present disclosure.
FIG. 2 is a process flowchart of the preparation method of the present disclosure.

The reference signs respectively indicate:
1. a tablet press; 2. a first grinding and granulating machine; 3. a primary screening machine; 4. a secondary screening machine; 5. a pressing vacuum feeder; 6. a feeding bucket; 7. a screening vacuum feeder; 8. a screening bin; 9. a second grinding and granulating machine; 10. a fine powder buffer bucket; 101. a pressing feed bin; 102. a pressing feeding screw; and 103. a pressing roller.

### DETAILED DESCRIPTION

For better understanding of the present disclosure in combination with the accompanying drawings and preferred embodiments, the present disclosure is described below more comprehensively and in more detail. However the protection scopes of the present disclosure are not limited to the following specific embodiments.

It is to be noted that when a certain component is described as "being fixed to, fixedly connected to, connected to or intercommunicated with" another component, it may be directly fixed to, fixedly connected to, connected to or intercommunicated with said another component; or it may be indirectly fixed to, fixedly connected to, connected to or intercommunicated with said another component through an intermediate connector.

Unless otherwise defined, all technical terms used below have the same meaning as that generally understood by those skilled in the art. The technical terms used in the context are only for the purpose of describing the specific embodiments, but do not intend to limit the protection scopes of the present disclosure.

Unless otherwise specified, all materials, reagents, instruments and devices used in the present disclosure may be available in the market or prepared through existing methods.

### Embodiment 1

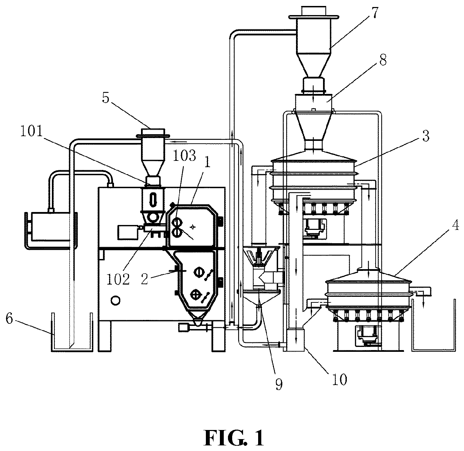

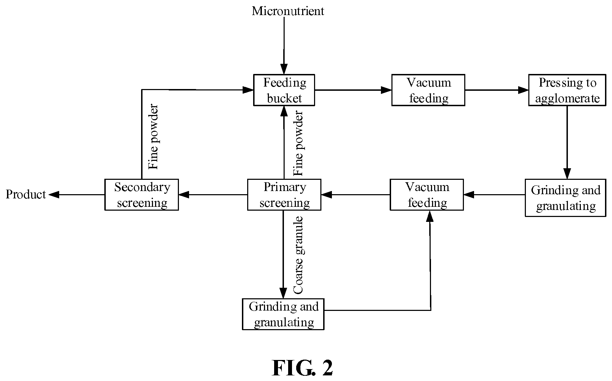

This is an embodiment of the apparatus for preparation of micronutrient supplement granules of a basic salt according to the present disclosure. The structure of the preparation apparatus for the micronutrient supplement granules of a basic salt is illustrated in FIG. 1, and the process flow of the preparation method is illustrated in FIG. 2. It can be seen from FIG. 1 that the preparation apparatus includes the tablet press 1, the first grinding and granulating machine 2 and the screening unit. The discharge end of the tablet press 1 is connected with the feed end of the first grinding and granulating machine 2. The discharge end of the first grinding and granulating machine 2 is connected to the feed end of the screening unit. The screening unit includes the primary screening machine 3 and the secondary screening machine 4. The feed end of the primary screening machine 3 is connected to the discharge end of the first grinding and granulating machine 2. The discharge end of the primary screening machine 3 is connected to the feed end of the secondary screening machine 4. The screen of the primary screening machine 3 is a square-mesh screen, and the screen of the secondary screening machine 4 is a round-mesh screen. The square-mesh of the screen of the primary screening machine 3 has a size preferably ranging from 8 mm × 8 mm to 3 mm × 3 mm, and the round-mesh of the screen of the secondary screening machine 4 has a diameter preferably ranging from 0.8 mm to 2.1 mm, in which the primary screening machine has two screens, in which the upper screen has the larger square-mesh size of 8 mm × 8 mm and the lower screen has the smaller square-mesh size of 3 mm × 3 mm. The granules between the two screens are kept. Accordingly, with the two-stage screening, the screening is more complete, and the micronutrient supplement granules of the basic salt with a granule diameter of 35µm to 380µm are obtained. More preferably, the square-mesh sizes of the screens of the primary screening machine 3 are ranging from 5 mm × 5 mm to 4 mm × 4 mm, and the round-mesh diameter of the screen of the secondary screening machine is ranging from 1.0 mm to 1.5 mm. This preparation apparatus can be used to treat a variety of basic salts including basic zinc chloride, basic zinc sulfate, basic cupric chloride, basic cupric sulfate, manganese hydroxy chloride and basic manganese sulfate, or mixtures thereof.

In the present embodiment, the tablet press 1 has a pressing feed bin 101. The lower part of the pressing feed bin 101 is connected to the feed end of a pressing feeding screw 102. The discharge end of the pressing feeding screw 102 is connected to a pressing roller 103. With the conveying speed of pressing feeding screw and the pressure applied by the pressing roller, the micronutrient supplement granules with the strength of over 10 N are obtained. The conveying speed of the feeding screw 102 is from 30 r/min to 60 r/min, and the pressure applied by the roller 103 is from 4 MPa to 20 MPa.

In the present embodiment, the feed end of the tablet press 1 is connected to a pressing feeding device. The pressing feeding device includes a pressing vacuum feeder 5, which is connected to a feeding bucket 6 through a pipeline. The screening vacuum feeder 7 and the screening bin 8 are installed between the first grinding and granulating machine 2 and the screening unit. The feed end of the screening vacuum feeder 7 is connected with the discharge end of the first grinding and granulating machine 2 through a pipeline. The discharge end of the screening vacuum feeder 7 is connected to the feed end of the screening bin 8, and the discharge end of the screening bin 8 is connected with the feed end of the primary screening machine 3. In both processes of the pressing feeding and screening feeding, the materials are fed by the vacuum feeders, which reduce the production of basic salt dust, and reduce the influence on the health of workers.

The coarse-granule outlet of the primary screening machine 3 in the preparation apparatus is connected with the feed end of a second grinding and granulating machine 9. The discharge end of the second grinding and granulating machine 9 is connected to the feed end of the screening vacuum feeder 7 through a pipeline. The fine-powder outlet of the primary screening machine 3 and the fine-powder outlet of the secondary screening machine 4 are both connected to the fine powder buffer bucket 10. The fine powder buffer bucket 10 is connected to the feed end of the pressing vacuum feeder 5 through a pipeline. In this way, waste of materials is reduced, and internal circulation of materials is realized. The primary screening machine 3 and the secondary screening machine 4 are flexibly connected through a cloth bag. The screening bin 8 and the primary screening machine 3 are flexibly connected through a cloth bag. The primary screening machine 3 and the second grinding and granulating machine 9 are flexibly connected through a cloth bag. The fine powder outlets of the primary screening machine 3 and the secondary screening machine 4 are also flexibly connected with the fine powder buffer bucket 10 through a cloth bag.

The usage method of the apparatus mainly included the following steps. Powder of basic salt(s) in the feeding bucket 6 was pumped into the tablet press 1 by the pressing vacuum feeder 5 to be pressed to agglomerate, and the block or bulk materials were obtained. The block or bulk materials were fed into the first grinding and granulating machine 2 to be grinded. The grinded materials were fed into the primary screening machine 3 by the screening vacuum feeder 7 to be screened. The granules with a desired size obtained from the primary screening machine 3 were fed into the secondary screening machine 4 to be screened again to provide the micronutrient supplement granules of the basic salt(s). The granule size of the micronutrient supplement granules of the basic salt(s) was from 35 µm to 380 µm. The coarse granules obtained from the primary screening machine 3 were fed into the second grinding and granulating machine 9 to be further grinded, and then fed into the primary screening machine 3 by the screening vacuum feeder 7 to be screened. The fine powder obtained from the primary screening machine 3 and the secondary screening machine 4 were fed into the tablet press 1 by the tableting vacuum feeder 5 to be pressed to agglomerate again.

### Embodiment 2

This is an embodiment of the apparatus for preparation of micronutrient supplement granules of a hydroxy-methionine chelate according to the present disclosure. The structure of the preparation apparatus for the micronutrient supplement granules of a hydroxy-methionine chelate is illustrated in FIG. 1, and the process flow of the preparation method is illustrated in FIG. 2. It can be seen from FIG. 1 that the preparation apparatus includes the tablet press 1, the first grinding and granulating machine 2 and the screening unit. The discharge end of the tablet press 1 is connected with the feed end of the first grinding and granulating machine 2. The discharge end of the first grinding and granulating machine 2 is connected to the feed end of the screening unit. The screening unit includes the primary screening machine 3 and the secondary screening machine 4. The feed end of the primary screening machine 3 is connected to the discharge end of the first grinding and granulating machine 2. The discharge end of the primary screening machine 3 is connected to the feed end of the secondary screening machine 4. The screen of the primary screening machine 3 is a square-mesh screen, and the screen of the secondary screening machine 4 is a round-mesh screen. The square-mesh of the screen of the primary screening machine 3 has a size preferably ranging from 8 mm × 8 mm to 3 mm × 3 mm, and the round-mesh of the screen of the secondary screening machine 4 has a diameter preferably ranging from 0.8 mm to 2.1 mm, in which, the primary screening machine has two screens, in which the upper screen has the larger square-mesh size of 8 mm × 8 mm and the lower screen has the smaller square-mesh size of 3 mm × 3 mm. The granules between the two screens are kept. Accordingly, with the two-stage screening, the screening is more complete, and the micronutrient supplement granules of the hydroxy-methionine chelate with a granule diameter of 35µm to 380µm are obtained. More preferably, the square-mesh sizes of the screens of the primary screening machine 3 are ranging from 5 mm × 5 mm to 4 mm × 4 mm, and the round-mesh diameter of the screen of the secondary screening machine is ranging from 1.0 mm to 1.5 mm.

In the present embodiment, the tablet press 1 has a pressing feed bin 101. The lower part of the pressing feed bin 101 is connected to the feed end of a pressing feeding screw 102. The discharge end of the pressing feeding screw 102 is connected to a pressing roller 103. With the conveying speed of pressing feeding screw and the pressure applied by the pressing roller, the micronutrient supplement granules with the strength of over 10 N are obtained. The conveying speed of the feeding screw 102 is from 30 r/min to 60 r/min, and the pressure applied by the roller 103 is from 4 MPa to 20 MPa.

In the present embodiment, the feed end of the tablet press 1 is connected to a pressing feeding device. The pressing feeding device includes a pressing vacuum feeder 5, which is connected to a feeding bucket 6 through a pipeline. The screening vacuum feeder 7 and the screening bin 8 are installed between the first grinding and granulating machine 2 and the screening unit. The feed end of the screening vacuum feeder 7 is connected with the discharge end of the first grinding and granulating machine 2 through a pipeline. The discharge end of the screening vacuum feeder 7 is connected to the feed end of the screening bin 8, and the discharge end of the screening bin 8 is connected with the feed end of the primary screening machine 3. In both processes of the pressing feeding and screening feeding, the materials are fed by the vacuum feeders, which reduce the production of hydroxy-methionine chelate dust, and reduce the influence on the health of workers.

The coarse-granule outlet of the primary screening machine 3 in the preparation apparatus is connected with the feed end of a second grinding and granulating machine 9. The discharge end of the second grinding and granulating machine 9 is connected to the feed end of the screening vacuum feeder 7 through a pipeline. The fine-powder outlet of the primary screening machine 3 and the fine-powder outlet of the secondary screening machine 4 are both connected to the fine powder buffer bucket 10. The fine powder buffer bucket 10 is connected to the feed end of the pressing vacuum feeder 5 through a pipeline. In this way, waste of materials is reduced, and internal circulation of materials is realized. The primary screening machine 3 and the secondary screening machine 4 are flexibly connected through a cloth bag. The screening bin 8 and the primary screening machine 3 are flexibly connected through a cloth bag. The primary screening machine 3 and the second grinding and granulating machine 9 are flexibly connected through a cloth bag. The fine powder outlets of the primary screening machine 3 and the secondary screening machine 4 are also flexibly connected with the fine powder buffer bucket 10 through a cloth bag.

The usage method of the apparatus mainly included the following steps. Powder of hydroxy-methionine chelate(s) in the feeding bucket 6 was pumped into the tablet press 1 by the pressing vacuum feeder 5 to be pressed to agglomerate, and the block or bulk materials were obtained. The hydroxy-methionine chelate included one or more hydroxy-methionine chelates including hydroxy methionine copper, hydroxy methionine ferrous, hydroxy methionine zinc, and hydroxy methionine manganese, in which the mole ratio of the hydroxy-methionine to the metal ion in the hydroxymethionine chelate was 1 : 1 or 2 : 1, preferably 2 : 1. The block or bulk materials were fed into the first grinding and granulating machine 2 to be grinded. The grinded materials were fed into the primary screening machine 3 by the screening vacuum feeder 7 to be screened. The granules with a desired size obtained from the primary screening machine 3 were fed into the secondary screening machine 4 to be screened again to provide the micronutrient supplement granules of the hydroxy-methionine chelate(s). The granule size of the micronutrient supplement granules of the hydroxy-methionine chelate(s) was from 35 µm to 380 µm. The coarse granules obtained from the primary screening machine 3 were fed into the second grinding and granulating machine 9 to be further grinded, and then fed into the primary screening machine 3 by the screening vacuum feeder 7 to be screened. The fine powder obtained from the primary screening machine 3 and the secondary screening machine 4 were fed into the tablet press 1 by the tableting vacuum feeder 5 to be pressed to agglomerate again.

The above is the preferred embodiments of the present disclosure and not intended to limit the present disclosure. For those skilled in the art, the present disclosure may have various modifications and changes.

### Embodiment 3

This is an embodiment of the apparatus for preparation of micronutrient supplement granules of a threonine chelate according to the present disclosure. The structure of the preparation apparatus for the micronutrient supplement granules of a threonine chelate is illustrated in FIG. 1, and the process flow of the preparation method is illustrated in FIG. 2. It can be seen from FIG. 1 that the preparation apparatus includes the tablet press 1, the first grinding and granulating machine 2 and the screening unit. The discharge end of the tablet press 1 is connected with the feed end of the first grinding and granulating machine 2. The discharge end of the first grinding and granulating machine 2 is connected to the feed end of the screening unit. The screening unit includes the primary screening machine 3 and the secondary screening machine 4. The feed end of the primary screening machine 3 is connected to the discharge end of the first grinding and granulating machine 2. The discharge end of the primary screening machine 3 is connected to the feed end of the secondary screening machine 4. The screen of the primary screening machine 3 is a square-mesh screen, and the screen of the secondary screening machine 4 is a round-mesh screen. The square-mesh of the screen of the primary screening machine 3 has a size preferably ranging from 8 mm × 8 mm to 3 mm × 3 mm, and the round-mesh of the screen of the secondary screening machine 4 has a diameter preferably ranging from 0.8 mm to 2.1 mm, in which, the primary screening machine has two screens, in which the upper screen has the larger square-mesh size of 8 mm × 8 mm and the lower screen has the smaller square-mesh size of 3 mm × 3 mm. The granules between the two screens are kept. Accordingly, with the two-stage screening, the screening is more complete, and the micronutrient supplement granules of the threonine chelate with a granule diameter of 35µm to 380µm are obtained. More preferably, the square-mesh sizes of the screens of the primary screening machine 3 are ranging from 5 mm × 5 mm to 4 mm × 4 mm, and the round-mesh diameter of the screen of the secondary screening machine is ranging from 1.0 mm to 1.5 mm.

In the present embodiment, the tablet press 1 has a pressing feed bin 101. The lower part of the pressing feed bin 101 is connected to the feed end of a pressing feeding screw 102. The discharge end of the pressing feeding screw 102 is connected to a pressing roller 103. With the conveying speed of pressing feeding screw and the pressure applied by the pressing roller, the micronutrient supplement granules with the strength of over 10 N are obtained. The conveying speed of the feeding screw 102 is from 30 r/min to 60 r/min, and the pressure applied by the roller 103 is from 4 MPa to 20 MPa.

In the present embodiment, the feed end of the tablet press 1 is connected to a pressing feeding device. The pressing feeding device includes a pressing vacuum feeder 5, which is connected to a feeding bucket 6 through a pipeline. The screening vacuum feeder 7 and the screening bin 8 are installed between the first grinding and granulating machine 2 and the screening unit. The feed end of the screening vacuum feeder 7 is connected with the discharge end of the first grinding and granulating machine 2 through a pipeline. The discharge end of the screening vacuum feeder 7 is connected to the feed end of the screening bin 8, and the discharge end of the screening bin 8 is connected with the feed end of the primary screening machine 3. In both processes of the pressing feeding and screening feeding, the materials are fed by the vacuum feeders, which reduce the production of threonine chelate dust, and reduce the influence on the health of workers.

The coarse-granule outlet of the primary screening machine 3 in the preparation apparatus is connected with the feed end of a second grinding and granulating machine 9. The discharge end of the second grinding and granulating machine 9 is connected to the feed end of the screening vacuum feeder 7 through a pipeline. The fine-powder outlet of the primary screening machine 3 and the fine-powder outlet of the secondary screening machine 4 are both connected to the fine powder buffer bucket 10. The fine powder buffer bucket 10 is connected to the feed end of the pressing vacuum feeder 5 through a pipeline. In this way, waste of materials is reduced, and internal circulation of materials is realized. The primary screening machine 3 and the secondary screening machine 4 are flexibly connected through a cloth bag. The screening bin 8 and the primary screening machine 3 are flexibly connected through a cloth bag. The primary screening machine 3 and the second grinding and granulating machine 9 are flexibly connected through a cloth bag. The fine powder outlets of the primary screening machine 3 and the secondary screening machine 4 are also flexibly connected with the fine powder buffer bucket 10 through a cloth bag.

The usage method of the apparatus mainly included the following steps. Powder of threonine chelate(s) in the feeding bucket 6 was pumped into the tablet press 1 by the pressing vacuum feeder 5 to be pressed to agglomerate, and the block or bulk materials were obtained. The threonine chelate included one or more threonine chelates including threonine copper, ferrous threonine, threonine zinc and threonine manganese, in which the mole ratio of the threonine to the metal ion in the hydroxymethionine chelate was 1:1 or 2:1, preferably 2:1. The block or bulk materials were fed into the first grinding and granulating machine 2 to be grinded. The grinded materials were fed into the primary screening machine 3 by the screening vacuum feeder 7 to be screened. The granules with a desired size obtained from the primary screening machine 3 were fed into the secondary screening machine 4 to be screened again to provide the micronutrient supplement granules of the threonine chelate(s). The granule size of the micronutrient supplement granules of the threonine chelate(s) was from 35 µm to 380 µm. The coarse granules obtained from the primary screening machine 3 were fed into the second grinding and granulating machine 9 to be further grinded, and then fed into the primary screening machine 3 by the screening vacuum feeder 7 to be screened. The fine powder obtained from the primary screening machine 3 and the secondary screening machine 4 were fed into the tablet press 1 by the tableting vacuum feeder 5 to be pressed to agglomerate again.

The above is the preferred embodiments of the present disclosure and not intended to limit the present disclosure. For those skilled in the art, the present disclosure may have various modifications and changes.

## Claims

1. An apparatus for preparing micronutrient supplement granules, comprising: a tablet press (1), a first grinding and granulate machine (2), and a screening unit; a discharge end of the tablet press (1) is connected to a feed end of the first grinding and granulate machine (2); a discharge end of the first grinding and granulate machine (2) is connected to a feed end of the screening unit; wherein the screening unit comprises a primary screening machine (3) and a secondary screening machine (4); a feed end of the primary screening machine (3) is connected to the discharge end of the first grinding and granulate machine (2), and a discharge end of the primary screening machine (3) is connected to a feed end of the secondary screening machine (4); wherein the tablet press (1) comprises a pressing feed bin (101); a lower part of the pressing feed bin (101) is connected to a feed end of a pressing feeding screw (102); a discharge end of the pressing feeding screw (102) is connected to a pressing roller (103); the conveying speed of the pressing feeding screw (102) is from 30 r/min to 60 r/min; the pressure applied by the pressing roller (103) is from 4 MPa to 20 MPa;
wherein a screen of the primary screening machine (3) is a grid screen, and a screen of the secondary screening machine (4) is a round hole screen; the screen of the primary screening machine (3) has a grid size of 8 mm × 8 mm to 3 mm × 3 mm, and the screen of the secondary screening machine (4) has a round hole diameter of 0.8 mm to 2.1 mm;
wherein a feed end of the tablet press (1) is connected to a pressing feeding device; the pressing feeding device comprises a pressing vacuum feeder (5), which is connected to a feeding bucket (6) through a pipeline.

2. The apparatus of claim 1, wherein a screening vacuum feeder (7) and a screening bin (8) are provided between the first grinding and granulate machine (2) and the screening unit; a feed end of the screening vacuum feeder (7) is connected to the discharge end of the first grinding and granulate machine (2) through a pipeline; a discharge end of the screening vacuum feeder (7) is connected to a feed end of the screening bin (8), and a discharge end of the screening bin (8) is connected to the feed end of the primary screening machine (3).

3. The apparatus of claim 2, wherein a coarse granule outlet of the primary screening machine (3) is connected to a feed end of a second grinding and granulate machine (9), and a discharge end of the second grinding and granulate machine (9) is connected to the feed end of the screening vacuum feeder (7) through a pipeline; fine powder outlets of the primary screening machine (3) and the secondary screening machine (4) are both connected to a fine powder buffer hopper (10); the fine powder buffer hopper (10) is connected to a feed end of the pressing vacuum feeder (5) through a pipeline.

4. The apparatus of claim 3, wherein the primary screening machine (3) and the secondary screening machine (4) are flexibly connected through a sack; the screening bin (8) and the primary screening machine (3) are flexibly connected through a sack; the primary screening machine (3) and the second grinding and granulate machine (9) are flexibly connected through a sack; and the fine powder buffer hopper (10) and the fine powder outlets of the primary screening machine (3) and the secondary screening machine (4) are flexibly connected through a sack.

## Patentansprüche

1. Vorrichtung zur Herstellung von Mikronährstoff-Supplementgranulaten, umfassend: eine Tablettenpresse (1), eine erste Mahl- und Granuliermaschine (2) und eine Siebeinheit; ein Austragsende der Tablettenpresse (1) mit einem Zuführende der ersten Mahl- und Granuliermaschine (2) verbunden ist; ein Austragsende der ersten Mahl- und Granuliermaschine (2) mit einem Zuführende der Siebeinheit verbunden ist; wobei die Siebeinheit eine Primärsiebmaschine (3) und eine Sekundärsiebmaschine (4) umfasst; ein Zuführende der Primärsiebmaschine (3) mit dem Austragsende der ersten Mahl- und Granuliermaschine (2) verbunden ist, und ein Austragsende der Primärsiebmaschine (3) mit einem Zuführende der Sekundärsiebmaschine (4) verbunden ist; wobei die Tablettenpresse (1) einen Presszuführbehälter (101) umfasst; ein unterer Teil des Presszuführbehälters (101) mit einem Zuführende einer Presszuführschnecke (102) verbunden ist; ein Austragsende der Presszuführschnecke (102) mit einer Presswalze (103) verbunden ist; die Fördergeschwindigkeit der Presszuführschnecke (102) von 30 U/min bis 60 U/min beträgt; der von der Presswalze (103) ausgeübte Druck von 4 MPa bis 20 MPa beträgt;
wobei ein Sieb der Primärsiebmaschine (3) ein Gittersieb ist, und ein Sieb der Sekundärsiebmaschine (4) ein Rundlochsieb ist; das Sieb der Primärsiebmaschine (3) eine Gittergröße von 8 mm × 8 mm bis 3 mm × 3 mm aufweist, und das Sieb der Sekundärsiebmaschine (4) einen Rundlochdurchmesser von 0,8 mm bis 2,1 mm aufweist;
wobei ein Zuführende der Tablettenpresse (1) mit einem Presszuführgerät verbunden ist; das Presszuführgerät einen Pressvakuumförderer (5) umfasst, der über eine Rohrleitung mit einem Zuführeimer (6) verbunden ist.

2. Vorrichtung nach Anspruch 1, wobei ein Siebvakuumförderer (7) und ein Siebbehälter (8) zwischen der ersten Mahl- und Granuliermaschine (2) und der Siebeinheit vorgesehen sind; ein Zuführende des Siebvakuumförderers (7) über eine Rohrleitung mit dem Austragsende der ersten Mahl- und Granuliermaschine (2) verbunden ist; ein Austragsende des Siebvakuumförderers (7) mit einem Zuführende des Siebbehälters (8) verbunden ist, und ein Austragsende des Siebbehälters (8) mit dem Zuführende der Primärsiebmaschine (3) verbunden ist.

3. Vorrichtung nach Anspruch 2, wobei ein Grobgranulatauslass der Primärsiebmaschine (3) mit einem Zuführende einer zweiten Mahl- und Granuliermaschine (9) verbunden ist, und ein Austragsende der zweiten Mahl- und Granuliermaschine (9) über eine Rohrleitung mit dem Zuführende des Siebvakuumförderers (7) verbunden ist; Feinpulverauslässe der Primärsiebmaschine (3) und der Sekundärsiebmaschine (4) beide mit einem Feinpulverpuffertrichter (10) verbunden sind; der Feinpulverpuffertrichter (10) über eine Rohrleitung mit einem Zuführende des Pressvakuumförderers (5) verbunden ist.

4. Vorrichtung nach Anspruch 3, wobei die Primärsiebmaschine (3) und die Sekundärsiebmaschine (4) über einen Sack flexibel verbunden sind; der Siebbehälter (8) und die Primärsiebmaschine (3) über einen Sack flexibel verbunden sind; die Primärsiebmaschine (3) und die zweite Mahl- und Granuliermaschine (9) über einen Sack flexibel verbunden sind; und der Feinpulverpuffertrichter (10) und die Feinpulverauslässe der Primärsiebmaschine (3) und der Sekundärsiebmaschine (4) über einen Sack flexibel verbunden sind.

## Revendications

1. Appareil de préparation de granules de compléments micronutritionnels, comprenant:
une presse (1) à comprimés, une première machine (2) de broyage et de granulation et une unité de tamisage; une extrémité de décharge de la presse (1) à comprimés est reliée à une extrémité d'alimentation de la première machine (2) de broyage et de granulation; une extrémité de décharge de la première machine (2) de broyage et de granulation est reliée à une extrémité d'alimentation de l'unité de tamisage; dans lequel l'unité de tamisage comprend une machine (3) de tamisage primaire et une machine (4) de tamisage secondaire; une extrémité d'alimentation de la machine (3) de tamisage primaire est reliée à l'extrémité de décharge de la première machine (2) de broyage et de granulation, et une extrémité de décharge de la machine (3) de tamisage primaire est reliée à une extrémité d'alimentation de la machine (4) de tamisage secondaire; dans lequel la presse (1) à comprimés comprend une trémie (101) d'alimentation de pressage; une partie inférieure de la trémie (101) d'alimentation de pressage est reliée à une extrémité d'alimentation d'une vis (102) d'alimentation de pressage; une extrémité de décharge de la vis (102) d'alimentation de pressage est reliée à un rouleau (103) de pressage; la vitesse de convoyage de la vis (102) d'alimentation de pressage est de 30 tr/min à 60 tr/min; la pression appliquée par le rouleau (103) de pressage est de 4 MPa à 20 MPa;
dans lequel un tamis de la machine (3) de tamisage primaire est un tamis à grille, et un tamis de la machine (4) de tamisage secondaire est un tamis à trous ronds; le tamis de la machine (3) de tamisage primaire a une taille de grille de 8 mm x 8 mm à 3 mm x 3 mm, et le tamis de la machine (4) de tamisage secondaire a un diamètre des trous ronds de 0,8 mm à 2,1 mm;
dans lequel une extrémité d'alimentation de la presse (1) à comprimés est reliée à un dispositif d'alimentation de pressage; le dispositif d'alimentation de pressage comprend un alimentateur (5) sous vide de pressage, qui est relié à un godet (6) d'alimentation par l'intermédiaire d'une conduite.

2. Appareil selon la revendication 1, dans lequel un alimentateur (7) sous vide de tamisage et une trémie (8) de tamisage sont disposés entre la première machine (2) de broyage et de granulation et l'unité de tamisage; une extrémité d'alimentation de l'alimentateur (7) sous vide de tamisage est reliée à l'extrémité de décharge de la première machine (2) de broyage et de granulation par l'intermédiaire d'une conduite; une extrémité de décharge de l'alimentateur (7) sous vide de tamisage est reliée à une extrémité d'alimentation de la trémie (8) de tamisage, et une extrémité de décharge de la trémie (8) de tamisage est reliée à l'extrémité d'alimentation de la machine (3) de tamisage primaire.

3. Appareil selon la revendication 2, dans lequel une sortie de granules grossiers de la machine (3) de tamisage primaire est reliée à une extrémité d'alimentation d'une deuxième machine (9) de broyage et de granulation, et une extrémité de décharge de la deuxième machine (9) de broyage et de granulation est reliée à l'extrémité d'alimentation de l'alimentateur (7) sous vide de tamisage par l'intermédiaire d'une conduite; les sorties de poudre fine de la machine (3) de tamisage primaire et de la machine (4) de tamisage secondaire sont toutes deux reliées à un réservoir (10) tampon de poudre fine; le réservoir (10) tampon de poudre fine est relié à une extrémité d'alimentation de l'alimentateur (5) sous vide de pressage par l'intermédiaire d'une conduite.

4. Appareil selon la revendication 3, dans lequel la machine (3) de tamisage primaire et la machine (4) de tamisage secondaire sont reliées de manière flexible par un sac; la trémie (8) de tamisage et la machine (3) de tamisage primaire sont reliées de manière flexible par un sac; la machine (3) de tamisage primaire et la deuxième machine (9) de broyage et de granulation sont reliées de manière flexible par un sac; et le réservoir (10) tampon de poudre fine et les sorties de poudre fine de la machine (3) de tamisage primaire et de la machine (4) de tamisage secondaire sont reliés de manière flexible par un sac.
